# EUROPEAN PATENT APPLICATION

(11) **EP 4 613 597 A1**
(43) Date of publication of application: **10.09.2025**
(21) Application number: 23884252.0
(22) Date of filing: 29.06.2023
(51) Int. Cl.: B60W 50/08

(54) **DRIVING MODE CONTROL METHOD AND SYSTEM, CONTROLLER, AND VEHICLE**

(30) Priority: 31.10.2022 CN 202211350810
(71) Applicant: BYD Company Limited, Shenzhen, Guangdong 518118 (CN)
(72) Inventor: ZHANG, Zhijie, Shenzhen, Guangdong 518118 (CN); YANG, Dongsheng, Shenzhen, Guangdong 518118 (CN); LIU, Ke, Shenzhen, Guangdong 518118 (CN); WANG, Huan, Shenzhen, Guangdong 518118 (CN); JING, Yu, Shenzhen, Guangdong 518118 (CN)
(74) Representative: Aldridge, Henry Alexander
(86) International application number: PCT/CN2023/104155
(87) International publication number: WO 2024/093313

(57) **Abstract**

A driving mode control method and system, a controller, and a vehicle, relating to the technical field of driving. The method comprises: upon detecting an action of an operating member, generating a driving control instruction; and on the basis of the driving control instruction, controlling a driving object to execute or exit a target driving mode, wherein the target driving mode comprises a common driving mode and an intelligent driving mode.

## Description

### CROSS-REFERENCE TO RELATED APPLICATIONS

The present disclosure claims priority to Chinese Patent Application No. 202211350810.0 filed on October 31, 2022 and entitled " DRIVING MODE CONTROL METHOD AND SYSTEM, CONTROLLER, AND VEHICLE ", which is incorporated herein by reference in its entirety.

### FIELD

The present disclosure relates to the field of driving technologies, and in particular, to a driving mode control method and system, a controller, and a vehicle.

### BACKGROUND

With the rapid development and popularization of intelligent and connected technologies in new energy vehicles, it is now the era of intelligent driving. An increasing number of vehicles are equipped with various driving modes, such as L1 primary driving mode, L2 advanced driving mode, L3 or above autonomous driving mode. Nevertheless, with the continuous evolution of intelligent driving technology and the increasing sophistication of consumer demands, purely intelligent driving solutions are no longer sufficient to meet consumer expectations.

Therefore, more ergonomic and efficient human-computer interaction technologies have been proposed in related technologies. However, in these technologies, the intelligent driving activation switch remains overly complex. Drivers are required to invest significant time and effort to learn various control functions, resulting in high learning costs and failing to meet the demand for simplicity in human-machine interaction.

### SUMMARY

Therefore, the purpose of the present disclosure is to provide a driving mode control method and system, a controller, and a vehicle that can easily and conveniently activate or deactivate the desired target intelligent driving mode, reducing the learning cost of interactive operations.

In order to achieve the above objects, an embodiment of the first aspect of the present disclosure provides a driving mode control method, which includes: generating a driving control instruction when detecting an action of an operating member; on the basis of the driving control instruction, controlling a driving object to execute or exit a target driving mode, the target driving mode includes a common driving mode and an intelligent driving mode.

In order to achieve the above objects, an embodiment of the second aspect of the present disclosure provides a driving mode control system, which includes: a generation module for generating a driving control instruction when detecting the action of an operating member; a control module is used for control the driving object controlling a driving object to execute or exit a target driving mode on the basis of the driving control instruction, the target driving mode includes a common driving mode and an intelligent driving mode.

In order to achieve the above objects, the third embodiment of the present disclosure provides a controller including a processor and a computer program stored on the memory. When the computer program is executed by the processor, it implements the driving mode control method described above.

In order to achieve the above objects, the fourth embodiment of the present disclosure provides a vehicle including a control system for the driving mode described above, or a controller as described above.

The driving mode control method and system, controller, and vehicle disclosed in embodiments of the present disclosure can directly activate or deactivate the intelligent driving mode through an operating member. The operation is simple and convenient, meeting the requirement of simplified human-computer interaction, and low learning cost of interactive operation.

### BRIEF DESCRIPTION OF THE DRAWINGS

FIG. 1 is a flowchart of a driving mode control method according to an embodiment of the present disclosure;
FIG. 2 is a schematic structural diagram of a steering wheel according to a first embodiment of the present disclosure.
FIG. 3 is a schematic structural diagram of a steering wheel according to a second embodiment of the present disclosure.
FIG. 4 is a schematic structural diagram of a steering wheel according to a third embodiment of the present disclosure.
FIG. 5 is a structural diagram of a steering wheel according to a fourth embodiment of the present disclosure;
FIG. 6 is a schematic structural diagram of a steering wheel according to a fifth embodiment of the present disclosure.
FIG. 7 is a schematic structural diagram of a steering wheel according to a sixth embodiment of the present disclosure;
FIG. 8 is a schematic structural diagram of a steering wheel according to a seventh embodiment of the present disclosure.
FIG. 9 is a flowchart of activating an ACC mode according to an embodiment of the present disclosure;
FIG. 10 is a flowchart of activating a DNP/ICC mode according to an embodiment of the present disclosure;
FIG. 11 is a structural block diagram of a controller according to an embodiment of the present disclosure;
FIG. 12 is a block diagram of a control system for driving mode according to an embodiment of the present disclosure.
FIG. 13 is a structural block diagram of a vehicle according to an embodiment of the present disclosure.

### DETAILED DESCRIPTION

Embodiments of the present disclosure are described in detail below, examples of which are shown in the accompanying drawings, where the same or similar reference numerals throughout represent the same or similar elements or elements with the same or similar functions. The embodiments described below with reference to the accompanying drawings are exemplary and intended to explain the present disclosure, and should not be construed as limiting the present disclosure.

Hereinafter, a control method and a system of the driving mode, a controller, and a vehicle of an embodiment of the present disclosure will be described with reference to the drawings.

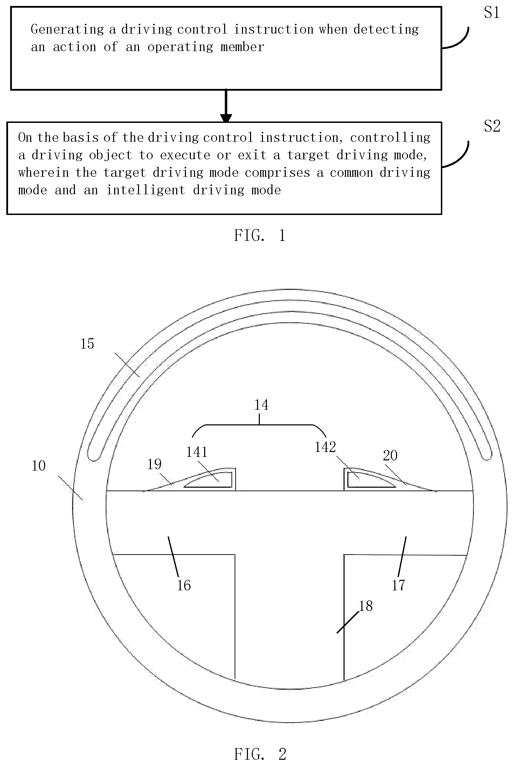

FIG. 1 is a flowchart of a driving mode control method according to an embodiment of the present disclosure.

As shown in Figure 1, the driving mode control method includes:
S1, a driving control instruction is generated upon detecting an action of an operating member.

Among them, the operating members can be set on the driving object (such as a vehicle), such as a steering wheel, an instrument panel, a center console, etc. of the vehicle. The action of the operating member may include at least one of the following: toggling, pressing, sliding, or rotating the operating member, and different driving control instructions can be realized by different numbers of toggling and pressing, different curves or lengths of sliding, and/or different angles of rotation.

It should be noted that before step S1, the driving target needs to be powered on.

S2, on the basis of the driving control instruction, the driving object is controlled to execute or exit a target driving mode, wherein the target driving mode includes a common driving mode and an intelligent driving mode.

In some embodiments, the driving control instruction includes at least one of an entry instruction, a mode switching instruction, and an exit instruction. Wherein the entry instruction may be an entry instruction to enter a target driving mode, the mode switching instruction may be a mode switching instruction to switch from a currently activated driving mode to a target driving mode, and the exit instruction may be an exit instruction to exit the currently activated driving mode, the driving object (such as the vehicle) can be controlled to execute or exit the target driving mode.

The method can directly execute or exit the desired target driving mode through the operation member, the operation is simple and convenient, meets the requirement of simplified human-computer interaction, and low learning cost of interactive operation.

In some embodiments, when an action of the operating member is detected, a driving control instruction is generated, and specifically, if the action is a first action and no intelligent driving mode is currently activated, an entry instruction of entering the first intelligent driving mode is generated; if the action is the first action and an intelligent driving mode is currently activated, an exit instruction of exiting the currently activated intelligent driving mode is generated; if the action is the second action and no intelligent driving mode is currently activated, an entry instruction of entering the second intelligent driving mode or the third intelligent driving mode is generated, where the priority of the second intelligent driving mode is higher than that of the third intelligent driving mode, and the priority of the third intelligent driving mode is higher than that of the first intelligent driving mode; if the action is a second action and an intelligent driving mode is currently activated, a mode switching instruction of switching to the first intelligent driving mode is generated; if the action is the third operation, an entry instruction of entering the common driving mode is generated.

Specifically, in some embodiments, the above-described action is toggling or pressing of an operating member. For example, the first action may be toggling or pressing the operating member once for a short time, the second action may be toggling or pressing the operating member multiple times, and the third action may be toggling or pressing the operating member once for a longer time, where the time interval between two adjacent toggles among the multiple toggles is less than a preset time. It should be noted that the above-described multiple toggles is for the same operating member, and when there are a plurality of operating members, for example, two operating members, when each of the two operating members is toggled once in a relatively short period of time, it is not regarded as a determination that the two operating members are togged continuously, but as a function of generating an entry instruction after one toggle, a function of generating an exit instruction after another toggle, or a function of generating an entry instruction after one toggle. Thus, by simply toggling or pressing the operating members a different number of times, various driving modes can be entered, exited, and switched, and the operation is simple and easy to use, which can enhance the user's experience of using driving modes.

In some embodiments, the above action is sliding of the operating member. For example, the first action may be sliding for a first length and for a shorter time, the second action may be sliding for a second length, and the third action may be sliding for a first length and for a longer time, where the second length may be a length greater than the first length. Thus, by simply sliding the operating members of different lengths, various driving modes can be entered, exited, and switched, and the operation is simple and easy to use, which can enhance the user's experience of using driving modes.

In some embodiments, the above action is rotation of the operating member. For example, the first action may be rotating by a first angle for a short time, the second action may be rotating by a second angle, and the third action may be rotating by a first angle for a longer time, where the second angle may be an angle greater than the first angle. Thus, by simply rotating the operating members of different angles, various driving modes can be entered, exited, and switched, and the operation is simple and easy to use, which can enhance the user's experience of using driving modes.

In some embodiments, each driving control instruction may correspond to a different type of action. For example, if the actions that can be performed by the operating member include toggling, pressing, sliding, and rotating, the entry instruction may correspond to the toggling or pressing actions, the exit instruction may correspond to the sliding actions, and the mode switching instruction may correspond to the rotating actions.

In this embodiment, the first intelligent driving mode may be an adaptive cruise control ACC mode, the second intelligent driving mode may be a di navigation pilot (DNP) mode, and the third intelligent driving mode may be an intelligent cruise control (ICC) mode. When an entry instruction to enter the intelligent driving mode is generated, the corresponding intelligent driving mode needs to be in a ready state. For generating an entry instruction to enter the second intelligent driving mode or the third intelligent driving mode, if both the DNP mode and the ICC mode are in a ready state, an entry instruction to enter the DNP mode is generated because the priority of the DNP mode is higher than that of the ICC mode; if the DNP mode is in an unready state and the ICC mode is in a ready state, an entry instruction to enter the ICC mode is generated.

Taking a vehicle as an example, the ready state may mean that the vehicle enters a corresponding intelligent driving mode condition allowable road section, and the determination method may include: one or more sets of state parameters of the vehicle are acquired, each set of state parameters corresponds to one intelligent driving mode; whether each group of state parameters meets the conditions for activating the corresponding intelligent driving mode is judged respectively; if satisfied, the corresponding intelligent driving mode will be placed in a ready state.

The one or more sets of state parameters of the vehicle are acquired, which includes: a set of state parameters corresponding to the ACC mode is acquired when the intelligent pilot switch of the vehicle is turned on; when the advanced navigation assist driving switch is turned on, a set of state parameters corresponding to the DNP mode, a set of state parameters corresponding to the ICC mode, and a set of state parameters corresponding to the ACC mode are acquired.

Specifically, the conditions for determining a ready state include: no faults in the entire vehicle system and the target driving mode is in an inactive and pending state. At the same time, conditions such as vehicle speed, charging state and network signals can be selectively determined according to the type of target driving mode. On the basis of the above priorities, if DNP mode is ready, then ICC mode must be ready; if ICC mode is ready, then ACC mode must be ready.

In some embodiments, when the intelligent driving mode is placed in the ready state, an icon corresponding to the intelligent driving mode on the dashboard of the vehicle is further controlled to light up.

For example, when the ACC mode is ready and the ACC icon on the dashboard is controlled to light up and display in gray; when the DNP mode is ready, the intelligent pilot icon on the dashboard is controlled to light up and display in gray.

In an embodiment of the present disclosure, the driving object is controlled to execute or exit the target driving mode on the basis of the driving control instruction, and specifically, when the driving control instruction is an entry instruction to enter the target driving mode (including the first intelligent driving mode, the second intelligent driving mode, the third intelligent driving mode, and the common driving mode), the driving object is controlled to activate the target driving mode; when the driving control instruction is a mode switching instruction to switch to the target driving mode, the driving object is controlled to exit the currently activated driving mode, and then the driving object is controlled to activate the target driving mode; when the driving control instruction is an exit instruction of the target driving mode, the driving target is controlled to exit the target driving mode.

In some embodiments, the driving object is a vehicle and controlling the vehicle to activate the ACC mode includes: a current vehicle speed of the vehicle is acquired; if the current vehicle speed is less than the preset cruising speed, the vehicle is controlled to cruise at the preset cruising speed; if the current vehicle speed is greater than or equal to the preset cruising vehicle speed, the vehicle is controlled to cruise at the current vehicle speed.

Here, the preset cruising speed may be 30 km/h.

In some embodiments, after the vehicle is controlled to exit the ACC mode, the method may further include: when the restart information of the intelligent driving mode is received, the vehicle is controlled to activate the ACC mode and cruise at the vehicle speed of the previous cruise.

Here, the restart information of the intelligent driving mode can be input through a restart button on the steering wheel of the vehicle, and when the button is pressed, the restart information can be received.

In some embodiments, the control method of the driving mode may further include: on the basis of driving control instructions or target driving modes, an indicator light is controlled to switch the corresponding indication modes, where different indication modes are used for indicating different driving information.

Specifically, the indication mode may include at least one of a color, a logo, a flashing frequency, brightness, and a progress bar. Driving information includes driving state information, driving switching information, and driving mode information. Among them, driving state information includes common driving state and intelligent driving state. Driving switching information refers to the current time being within a preset time before or after switching driving state or driving mode. Driving mode information includes common driving mode, first intelligent driving mode, second intelligent driving mode, and third intelligent driving mode. The indicator light can provide corresponding simple and easy to understand prompt information, making it easy for users to know the current driving mode of the driving object for better driving control.

In some embodiments, on the basis of driving control instructions or target driving modes, an indicator light is controlled to switch the corresponding indication modes. Specifically, when the current time is within the preset time before the second intelligent driving mode or the third intelligent driving mode is activated, the indicator light is controlled to emit a first color light and flash at a first preset frequency for a second preset time; when the driving object activates the second intelligent driving mode or the third intelligent driving mode, the indicator light is controlled to emit a first color light and flash at a second preset frequency for a first preset number of times before remaining on, where the second preset frequency is greater than the first preset frequency; when the driving object activates the first intelligent driving mode, the indicator light is controlled to emit a second color light and flash at a third preset frequency for a second preset number of times before remaining on; when the driving object is in common driving mode, the indicator light is controlled to emit a third color light and flashes at a fourth preset frequency for a third preset number of times before remaining on.

Specifically, when the ICC mode or DNP mode is in the activatable state (i.e. ready state), the indicator light can be controlled to flash in blue-green breathing light at the first preset frequency, such as 1HZ. The flashing display can also be controlled to last for a certain period of time, such as 10 seconds, and then canceled after 10 seconds. According to the flashing of the blue-green breathing light, the driver knows that DNP mode or ICC mode can be activated at this time. Among them, the flashing frequency and duration can also be other values, and the light color can also be other colors, which can be set according to needs.

When the vehicle is controlled to activate the DNP mode or ICC mode, the operating member (such as the paddle) can be toggled twice. When this operation is detected, the indicator light can be controlled to emit the first color (such as blue-green) light and flash the first preset frequency (such as 2HZ) for the first preset number of times (such as 2 times, 3 times, etc.) before remaining on, where the second preset frequency is greater than the first preset frequency.

When the vehicle is controlled to activate the ACC mode, the indicator light is controlled to emit a second color (such as white) light and flash at a third preset frequency (such as 2HZ) for a second preset number of times (such as 2 times, 3 times, etc.) before remaining on. When the vehicle is controlled to activate the common driving mode, the indicator light is controlled to emit a third color (such as yellow) light and flash at a fourth preset frequency (such as 2HZ) for a third preset number of times (such as 2 times, 3 times, etc.) before remaining on.

The above colors, frequencies, and preset times can be set as needed, which can be fixed values or customized through the vehicle terminal.

In some embodiments, the color of the indicator light may be different before and after entering the same intelligent driving mode. Taking the ICC mode or the DNP mode as an example, the indicator light can display light green within the preset time before entering the ICC mode or the DNP mode, and can display dark green after entering; It can also be displayed in a gradient, such as gradually deepening from light green to dark green and remaining bright. This process can be set as needed to determine whether to flash the lights.

The progress of entering the intelligent driving mode may also be displayed by a progress bar or brightness. Still taking ICC mode or DNP mode as an example, at the preset time before entering the ICC mode or the DNP mode, the progress bar can be controlled to display 0% progress. As the time increases, the progress bar gradually lengthens until the progress reaches 100% full when entering is completed. Alternatively, at the preset time before entering the ICC mode or the DNP mode, the brightness of the indicator light can be controlled to 0% progress, and as the time increases, the brightness of the blue-green gradually increases until the progress reaches the highest brightness when entering is completed. This process can be set whether the light is flashed as needed.

It is also possible to identify and display the progress of entering the intelligent driving mode. Still taking ICC mode as an example, a symbol is the letter "ICC", at a preset time before entering the ICC mode or the DNP mode, the indicator light starts to display from "I" to "C", and as the time increases, "I"-"IC"-"ICC" gradually appear. This process can be set whether the light is flashed or whether a fixed color is displayed as needed.

In some embodiments, the control method of the driving mode further includes: the brake pedal travel of the vehicle is acquired; if the brake pedal travel exceeds the preset threshold, it indicates that the driver has a braking demand. At this point, the vehicle should be controlled to exit the currently activated intelligent driving mode and switch to the common driving mode, allowing the driver to take full control of the vehicle. Additionally, the indicator light is controlled to stop emitting light signals.

In some embodiments, the control method of the driving mode may further include: the driver's facial image (which can be captured by a DMS camera embedded in the outer spoke of the steering wheel) is acquired; the driver's attention state according to the facial image is identified, and the indicator light is controlled to display corresponding light signals according to the attention state.

For example, if the driver is determined to be inattentive and in a state of significant fatigue according to the facial image, the system should enter a high-risk warning state. In this case, the indicator light can be controlled to display a red light and flash at a higher frequency, such as 4 Hz, for a duration of 0-4 seconds.

In some embodiments, the indicator light can also be controlled to emit corresponding light signals when the vehicle is parked. For instance, upon a parking event is detected, an MRC (Minimal Risk Condition) safety parking prompt can be activated. In this scenario, the indicator light can be controlled to display a red light and flash continuously at 2 Hz. The flashing will be canceled once the MRC safety parking state is exited. Additionally, during automatic lane changes or manual lever-initiated lane changes, the indicator light can be controlled to emit corresponding light signals, such as a blue breathing light flashing at 2 Hz (the flashing duration is determined by the length of the lane change signal). This allows the driver to understand the vehicle's state according to the light prompts, facilitating better use of the intelligent driving mode.

With reference to FIGS. 2 to 8, the setting mode of the operation member and the indicator light will be described by taking the operation member and the indicator light installed on the steering wheel of the vehicle as an example.

FIG. 2 is a schematic diagram of the steering wheel structure according to the first embodiment of the present disclosure.

As shown in FIG. 2, the steering wheel 100 includes: an outer spoke 10, an inner spoke 11, and an operation member 12. Referring to FIG. 2, the inner spoke 11 is arranged in the outer spoke 10; the operation member 12 is arranged on the inner spoke 11 and is connected to a controller 400. The operation member 12 is used for receiving user inputs. When the controller 400 detects an operation on the operation member 12, it determines the target driving mode and the corresponding control instruction for the target driving mode. If the control instruction is an exit instruction, the controller 400 controls the vehicle to exit the target driving mode; if the control instruction is an entry instruction, it controls the vehicle to enter the target driving mode.

Specifically, the operation member 12 may include buttons, paddles, etc. If the operation member 12 includes buttons, the corresponding operations could be pressing once, twice, three times, etc. If the operation component 12 includes paddles, the corresponding operations could be toggled once, twice, three times, etc. Subsequently, the activation or deactivation instructions for different intelligent driving modes can be set correspondingly for different operations. In some embodiments, pressing twice or more could correspond to the same intelligent driving mode and the same instruction, and similarly, toggling twice or more could also correspond to the same intelligent driving mode and the same instruction. Here, the time interval between two adjacent presses or toggles should be less than a preset duration, which can be set as needed, such as within 0-0.5 seconds.

In practical use, the operation can be recognized by directly operating the operation member 12, and the corresponding intelligent driving mode can be activated or inactivated according to the recognition result. The whole process is simple and convenient to operate, which meets the requirement of simplified human-computer interaction, and low learning cost of interactive operation.

As shown in FIG. 2, the indicator light includes: a first indicator light 14 and/or a second indicator light 15 (FIG.2 illustrates an example where both the first indicator light 14 and the second indicator light 15 are included). The first indicator light 14 is arranged on the inner spoke 11, and the second indicator light 15 is arranged on the outer spoke 10. The first indicator light 14 and the second indicator light 15 are connected to the controller 400.

In this embodiment, the controller 400 can also control the first indicator light 14 and the second indicator light 15 to emit corresponding light information according to driving control instructions or target driving modes. For example, when the operating member 12 is a paddle, if the paddle is toggled once, the vehicle can be controlled to activated the ACC (Adaptive Cruise Control) function, and the first indicator light 14 and the second indicator light 15 can also be controlled to light up and emit white light. Thus, the currently activated intelligent driving mode can be acquired according to the light information displayed by the first indicator light 14 and the second indicator light 15.

In some embodiments, as shown in FIG. 2, the inner spoke 11 includes a first spoke 16, a second spoke 17, and a third spoke 18, which form a T-shaped structure.

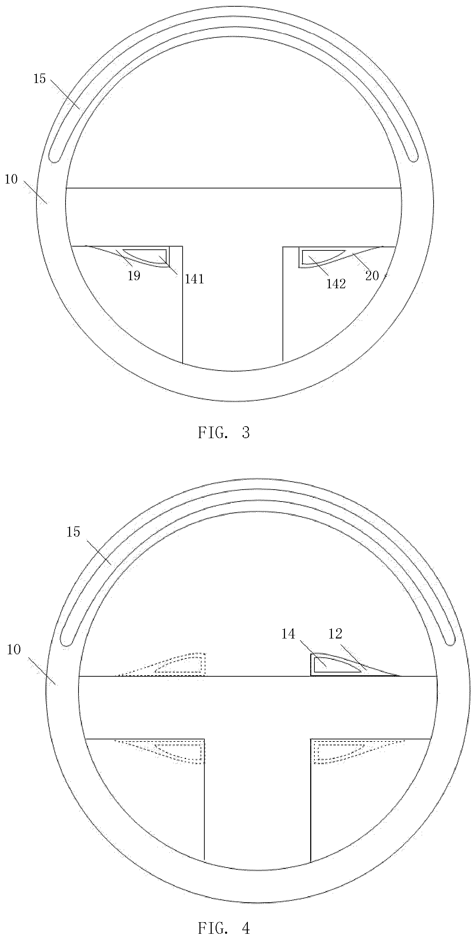

In this embodiment, referring to FIG. 2, the operating member 12 includes paddles, and the number of paddles can be two, respectively referred to as a first paddle 19 and a second paddle 20. The first paddle 19 and the second paddle 20 are respectively arranged on the upper side (as shown in FIG. 2) or the lower side (as shown in FIG. 3) of the first spoke 16 and the second spoke 17, and are symmetrical with respect to the third spoke 18.

In some embodiment, the number of paddles can also be one, that is, using a single paddle setting, the paddle can be set on the upper or the lower side of the first spoke 16 or the second spoke 17, as shown in any of the four positions in FIG. 4. Of course, the number of paddles can also be three, four, etc., which can be set according to specific needs.

In some embodiments, as shown in FIGS. 2 to 8, the second indicator light 15 can be arranged in the form of a light strip on the outer spoke 10 and symmetrical with respect to the third spoke 18.

Referring to FIGS. 2 to 7, the second indicator light 15 can be arranged on the upper half of the steering wheel 100, approximately 1/50-1 arc. In some embodiments, the second indicator light 15 can also be arranged on the lower half of the steering wheel 100.

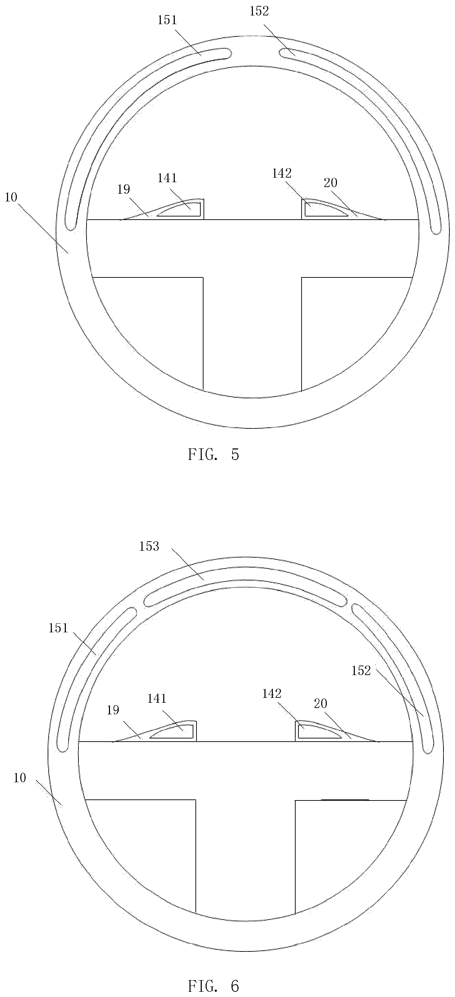

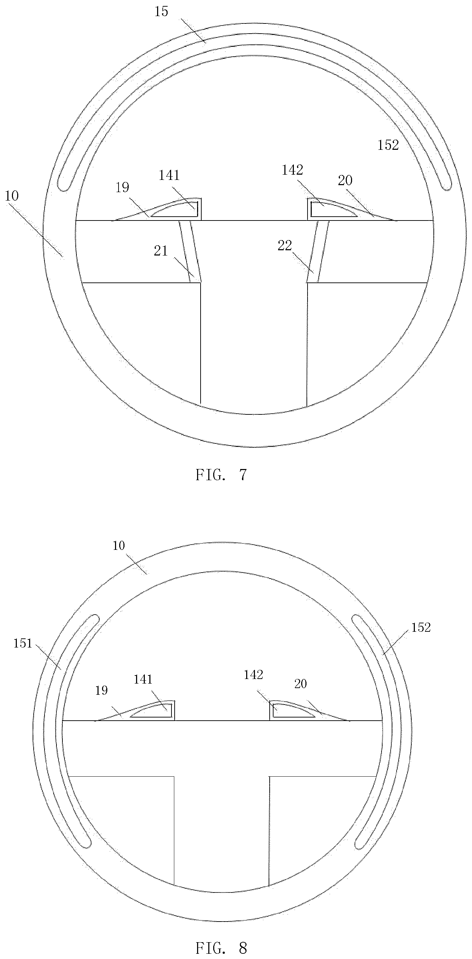

As an example, referring to FIGS.5 and 8, the second indicator light 15 can be divided into a left spoke indicator light 151 and a right spoke indicator light 152.

Referring to FIG. 5, the left spoke indicator light 151 and the right spoke indicator light 152 are disconnected in the middle, and the DMS camera can be arranged at this disconnection position. Among them, the DMS (Driver Monitor System) camera can capture the driver's facial images and transmit them to the controller 400. The controller 400 can recognize the driver's attention according to the facial images and control the indicating mechanism send corresponding indication information according to the attention situation. For example, when the driver's attention being not focused and fatigue is detected, the second indicator light 15 is controlled to emit a red light and flash at a high frequency (such as 4HZ) to effectively warn the driver to focus on driving, thereby improving driving safety.

Referring to FIG. 8, the left spoke indicator light 151 can be arranged on the left side of the outer spoke 10, and the right spoke indicator light 152 can be arranged on the right side of the outer spoke 10.

As another example, referring to FIG. 6, the second indicator light 15 can also be divided into a left spoke indicator light 151, a right spoke indicator light 152, and a middle spoke indicator light 153, which are respectively arranged in the left, right, and middle parts of the upper half of the outer spoke 10.

In some embodiments, referring to FIGS. 2, 3, and 5 to 8, the first indicator light 14 may include two paddle indicator lights (referred to as a left paddle indicator light 141 and a right paddle indicator light 142), respectively arranged near the first paddle 19 and the second paddle 20, and symmetrical with respect to the third spoke 18.

In this embodiment, referring to FIG. 7, the first indicator light 14 may also include two strip indicator lights, respectively referred to as a left strip indicator light 21 and a right strip indicator light 22. Two light strip indicator lights are respectively arranged on the first spoke 16 and the second spoke 17 in the form of light strips, and are arranged on both sides of the T-shaped intersection. The control change pattern of the left light strip indicator light 21 and the right light strip indicator light 22 can be the same as that of the paddle indicator light. Among them, the T-shaped intersection point can be arranged with a horn.

In the embodiments of the present disclosure, the first indicator light 14 and the second indicator light 15 may include a liquid crystal display (LCD/OLED), a thin film transistor display, an active matrix display, a segmented display, a light emitting diode (LED), a laser, halogen, fluorescent, infrared LED lighting device, or any other suitable light emitting element.

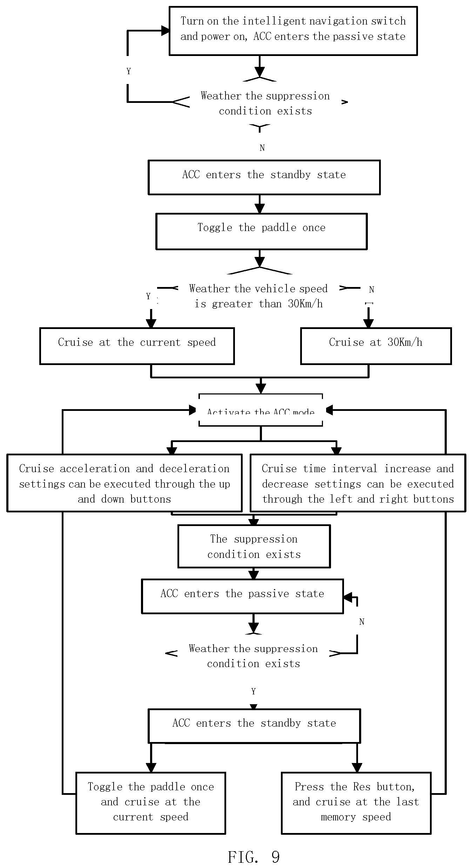

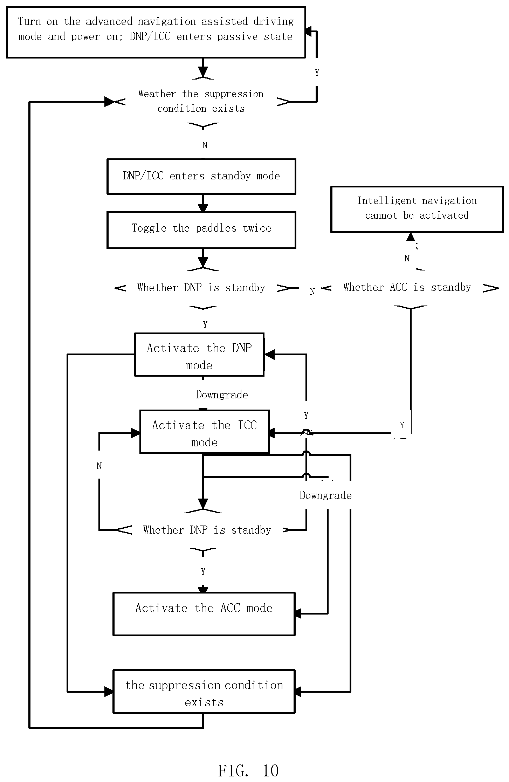

With reference to FIGS. 9 and 10, taking the control of intelligent driving mode as an example, the control methods of ACC mode, ICC mode, and DNP mode will be described below:

Referring to FIG. 9, the logic for activating the ACC mode through the paddles on the steering wheel includes: when the vehicle is powered on and the intelligent navigation switch is turned on, the ACC mode enters the passive state. If the ACC mode has no suppression condition, then the ACC mode enters the standby state. At this time, the paddle is toggled once, if the vehicle speed is less than 30Km/h, the vehicle will be controlled to cruise at 30Km/h and activate (i.e. turn on) the ACC mode; if the vehicle speed is greater than 30Km/h, the vehicle will be controlled to cruise at the current speed and activate the ACC mode, while the indicator light is kept on in white. If the paddle is toggled once or the brake pedal is pressed at this time, the vehicle will be controlled to exit the ACC mode and enter passive mode; if there is no suppression condition afterwards, the ACC mode will enter standby mode again. However, if the paddle is toggled again at this time, the vehicle will be controlled to cruise at the current speed and the ACC mode will be activated; if the paddle is not toggled at this time, but the restart button Res on the steering wheel is pressed, the vehicle will be controlled to restore the last memory speed cruise and activate the ACC mode. Among them, the left side of the steering wheel can be arranged with up and down buttons and left and right buttons. Cruise acceleration and deceleration settings can be executed through the up and down buttons, and cruise time interval increase and decrease settings can be executed through the left and right buttons.

Referring to FIG. 10, the logic for activating the DNP/ICC mode through the paddles on the steering wheel includes: if there is no suppression condition for the DNP/ICC mode, when the vehicle is powered on and the soft switch for advanced navigation assisted driving mode in the central control is turned on, the DNP/ICC mode enters the passive state. At this time, the paddles are continuously toggled twice, if neither the DNP mode nor the ICC mode successfully enters the standby state, the vehicle's onboard terminal or dashboard can be controlled to prompt the message that intelligent navigation cannot be activated; if the DNP mode does not enter standby mode and the ICC mode enters standby mode, the ICC mode will be activated, and the indicator light will be controlled to turn green and flash three times at 2HZ before remaining on; if the DNP mode enters standby mode after the ICC mode being activated, the DNP mode will be directly activated, and the indicator light will be controlled to turn green and flash three times at 2HZ before remaining on. If DNP mode needs to be downgraded to the ICC mode during activation, the DNP mode will be inactivate and then the ICC mode will be activate, while the indicator light will be controlled to turn green and flash three times at 2HZ before remaining on. After activation of the DNP/ICC mode, if the paddle is toggled once or the brake pedal is pressed, the DNP/ICC mode will be exited, and the indicator light will be controlled to stop displaying. When the ICC mode is downgraded to ACC mode, the vehicle will be controlled to cruise at the current speed and activate the ACC mode, while the control indicator light will be controlled to remain white and constantly on. Cruise acceleration and deceleration settings can be executed through the up and down buttons of the steering wheel, and cruise time interval increase and decrease settings can be executed through the left and right buttons of the steering wheel.

It should be noted that the DNP mode and the ICC mode cannot exist simultaneously. The DNP has higher priority than the ICC, if the DNP is ready, DNP will be activated first, if DNP is not ready and the ICC is ready, then the ICC will be activated.

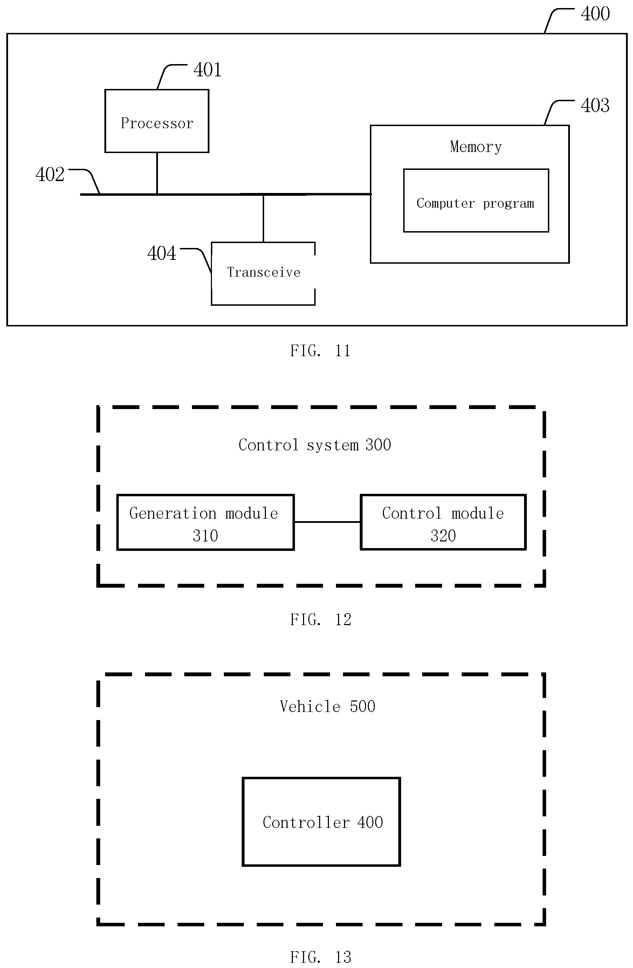

FIG. 11 is a structural block diagram of the controller in an embodiment of the present disclosure.

As shown in FIG. 11, the controller 400 includes a processor 401 and a memory 403. Among them, processor 401 is connected to memory 403, such as through bus 402. In some embodiments, the controller 400 may also include a transceiver 404. It should be noted that in practical applications, the transceiver 404 is not limited to one, and the structure of the controller 400 does not constitute a limitation on the disclosed embodiments.

Processor 401 can be a CPU (Central Processing Unit), a general-purpose processor, a DSP (Digital Signal Processor), an ASIC (Application Specific Integrated Circuit), a FPGA (Field Programmable Gate Array), or any combination thereof. It can implement or execute various exemplary logical blocks, modules, and circuits described in conjunction with the present disclosure. Processor 401 can also be a combination of computing functions, such as a combination of one or more microprocessors, a combination of DSP and microprocessors, etc.

Bus 402 may include a pathway for transmitting information between the aforementioned components. Bus 402 can be a PCI (Peripheral Component Interconnect) a bus or an EISA (Extended Industry Standard Architecture) bus, etc. Bus 402 can be divided into address bus, data bus, control bus, etc. For ease of representation, only one thick line is used in FIG. 12, but it does not indicate that there is only one bus or one type of bus.

The memory 403 is used for storing a computer program corresponding to the control method of the driving mode in the above embodiments of the present disclosure, which is controlled and executed by the processor 401. The processor 401 is used for executing computer programs stored in the memory 403 to implement the content shown in the aforementioned method embodiments. The controller 400 shown in FIG. 12 is only an example and should not impose any limitations on the functionality and scope of use of the disclosed embodiments.

FIG. 12 is a structural block diagram of the control system for the driving mode of the disclosed embodiment.

As shown in FIG. 12, the control system 300 includes a generation module 310 and a control module 320.

The generation module 310 is used for generating driving control instructions when detecting the action of the operating member; the control module 320 is used for controlling the driving object to execute or exit the target driving mode on the basis of the driving control instructions, where the target driving mode includes a common driving mode and an intelligent driving mode.

For other specific embodiments of the driving mode control system according to the embodiment of the present disclosure, please refer to the specific embodiment of the driving mode control method according to the above-described embodiment of the present disclosure.

FIG. 13 is a structural block diagram of a vehicle according to an embodiment of the present disclosure.

As shown in FIG. 13, the vehicle 500 of the embodiment of the present disclosure includes the controller 400 mentioned above.

In another embodiment of the present disclosure, vehicle 500 includes the control system 300 described above.

In summary, the control method and system of the driving mode, the controller, and the vehicle in embodiments of the present disclosure can directly activate or deactivate the desired target driving mode through the operating member, with simple and convenient operation. At the same time, it can provide simple and easy-to-understand light prompt information that conforms to driving habits through indicator lights, which meets the requirement of simplified human-computer interaction, and low learning cost of interactive operation.

It should be noted that the logic and/or steps represented in the flowchart or otherwise described herein, such as a sequential list of executable instructions used to implement logical functions, can be specifically implemented in any computer-readable medium for use by instruction execution systems, devices, or equipment (such as computer-based systems, systems including processors, or other systems that can take instructions from instruction execution systems, devices, or equipment and execute instructions), or used in conjunction with these instruction execution systems, devices, or equipment. For the purpose of this description, "computer-readable medium" may be any device that can contain, store, communicate, disseminate, or transmit programs for use in instruction execution systems, devices, or equipment, or in combination with such instruction execution systems, devices, or equipment. More specific examples of computer-readable media (non-exhaustive list) include electrical connectors (electronic devices) with one or more wiring, portable computer enclosures (magnetic devices), random access memory (RAM), read-only memory (ROM), erasable and editable read-only memory (EPROM or flash memory), fiber optic devices, and portable optical disc read-only memory (CDROM). In addition, computer-readable media can even be paper or other suitable media on which the program can be printed, as the program can be obtained electronically, for example, by optical scanning of paper or other media, followed by editing, interpretation, or necessary processing in other suitable ways, and then stored in computer memory.

It should be understood that the various parts disclosed herein can be implemented using hardware, software, firmware, or a combination thereof. In the above embodiments, multiple steps or methods can be implemented using software or firmware stored in memory and executed by a suitable instruction execution system. For example, if implemented in hardware, as in another implementation, any one or a combination of the following techniques known in the art can be used: discrete logic circuits with logic gate circuits for implementing logic functions on data signals, application specific integrated circuits with suitable combinational logic gate circuits, programmable gate arrays (PGA), field programmable gate arrays (FPGA), etc.

In the description of this description, the reference to the terms "an embodiment", "some embodiments", "examples", "specific examples", or "some examples" means that the specific features, structures, materials, or characteristics described in conjunction with the embodiments or examples are included in at least one embodiment or example disclosed herein. In this description, the illustrative expressions of the above terms may not necessarily refer to the same embodiments or examples. Moreover, the specific features, structures, materials, or characteristics described can be combined in any one or more embodiments or examples in a suitable manner.

In the description of this disclosure, it should be understood that the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential" and other directional or positional relationships indicated are based on the directional or positional relationships shown in the accompanying drawings, and are only for the convenience of describing this disclosure and simplifying the description, and do not indicate or imply the devices or components referred to. It must have a specific orientation, be constructed and operated in a specific orientation, and therefore cannot be understood as a limitation on this disclosure.

In addition, the terms "first" and "second" are only used for descriptive purposes and cannot be understood as indicating or implying relative importance or implying the number of technical features indicated. Therefore, the features that are limited to "first" and "second" can explicitly or implicitly include at least one of these features. In this disclosure, the meaning of "multiple" refers to at least two, such as two, three, etc., unless otherwise specified.

In the present disclosure, unless otherwise specified and limited, the terms "installation", "connection", "link", "fixation", etc. should be broadly understood, for example, they can be fixed connections, detachable connections, or integrated; It can be a mechanical connection or an electrical connection; It can be directly connected or indirectly connected through an intermediate medium, and can be a connection within two components or an interaction relationship between two components, unless otherwise specified. For ordinary technical personnel in this field, the specific meanings of the above terms in this disclosure can be understood according to the specific situation.

In the present disclosure, unless explicitly specified or defined otherwise, the description of a first feature being "on" or "under" a second feature may mean that the first and second features are in direct contact, or that the first and second features are in indirect contact through an intermediate medium. Furthermore, the description of a first feature being "above," "over," or "on top of" a second feature may mean that the first feature is directly above or diagonally above the second feature, or simply that the first feature is at a higher horizontal level than the second feature. Similarly, the description of a first feature being "below," "under," or "beneath" a second feature may mean that the first feature is directly below or diagonally below the second feature, or simply that the first feature is at a lower horizontal level than the second feature.

Although the embodiments of the present disclosure have been shown and described above, it should be understood that these embodiments are exemplary and should not be construed as limiting the scope of the present disclosure. Within the scope of the present disclosure, those of ordinary skill in the art may make variations, modifications, substitutions, and adaptations to the aforementioned embodiments.

## Claims

1. A driving mode control method, comprising:
generating a driving control instruction in response to an action of an operating member;
controlling a driving object to execute or exit a target driving mode on the basis of the driving control instruction, wherein the target driving mode comprises a common driving mode and an intelligent driving mode.

2. The method according to claim 1, wherein the action of the operating member comprises at least one of toggling, pressing, sliding, and rotating the operating member.

3. The method according to claim 2, wherein the driving control instruction is implemented by the number of toggles or presses, the curve or length of a slide, and/or the angle of rotation.

4. The method according to any one of claims 1 to 3, wherein the driving control instruction comprises at least one of an entry instruction, a mode switching instruction, and an exit instruction.

5. The method according to claim 4, wherein the generating a driving control instruction in response to an action of an operating member, specifically:
if the action is a first action and the current intelligent driving mode is inactivated, generating an entry instruction to enter a first intelligent driving mode;
if the action is the first action and the current intelligent driving mode is activated, generating an exit instruction to exit the currently activated intelligent driving mode;
if the action is a second action and the current intelligent driving mode is inactivated, generate an entry instruction to enter a second intelligent driving mode or a third intelligent driving mode, where the priority of the second intelligent driving mode is higher than that of the third intelligent driving mode, and the priority of the third intelligent driving mode is higher than that of the first intelligent driving mode;
if the action is the second action and the current intelligent driving mode is activated, generating a mode switching instruction to switch to the first intelligent driving mode;
if the action is a third action, generating an entry instruction to enter the common driving mode.

6. The method according to claim 5, wherein the first intelligent driving mode is Adaptive Cruise Control (ACC) mode, and the second intelligent driving mode is Di Navigation Pilot (DNP) mode, and the third intelligent driving mode is Intelligent Cruise Control (ICC) mode.

7. The method according to any one of claims 4 to 6, wherein the controlling a driving object to execute or exit a target driving mode on the basis of the driving control instruction, specifically:
when the driving control instruction is an entry instruction for entering the target driving mode, controlling the driving object to activate the target driving mode;
when the driving control instruction is the mode switching instruction to switch to the target driving mode, controlling the driving object to exit the currently activated intelligent driving mode, and then controlling the driving object to activate the target driving mode;
when the driving control instruction is an exit instruction for exiting the target driving mode, control the driving object to exit the target driving mode.

8. The method according to claim 6, wherein the driving object is a vehicle, and controlling the vehicle to activate the ACC mode comprises:
acquiring the current vehicle speed of the vehicle;
if the current vehicle speed is less than a preset cruise speed, controlling the vehicle to cruise at the preset cruise speed;
if the current vehicle speed is greater than or equal to the preset cruising speed, controlling the vehicle to cruise at the current vehicle speed.

9. The method according to claim 8, wherein after controlling the vehicle to exit the ACC mode, the method further comprises:
when receiving restart information of the intelligent driving mode, controlling the vehicle to activate the ACC mode and cruise at the speed of the previous cruise.

10. The method according to any one of claims 1 to 9, wherein the method further comprises:
switching corresponding instruction modes based on the driving control instruction or the target driving mode control indicator light, wherein different indication modes being used for indicating different driving information.

11. The method according to claim 10, wherein the indication modes comprise at least one of color, identification, flashing frequency, brightness, and progress bar.

12. The method according to claim 11, wherein the driving information comprises driving state information, driving switching information, and driving mode information, wherein the driving state information comprising a common driving state and an intelligent driving state, the driving switching information referring to the current time is within the preset time before or after switching driving state or driving mode, and the driving mode information comprising a common driving mode, a first intelligent driving mode, a second intelligent driving mode, and a third intelligent driving mode.

13. The method according to claim 12, wherein switching corresponding instruction modes based on the driving control instruction or the target driving mode control indicator light, specifically:
when the current time is within the preset time before activating the second intelligent driving mode or the third intelligent driving mode, controlling the indicator light to emit a first color light and flash at a first preset frequency for a second preset time;
when the driving object activates the second intelligent driving mode or the third intelligent driving mode, controlling the indicator light to emit a first color light and flash a first preset number of times at a second preset frequency before remaining on, wherein the second preset frequency is greater than the first preset frequency;
when the driving object activates the first intelligent driving mode, controlling the indicator light to emit a second color light and flash a second preset number of times at a third preset frequency before remaining on;
when the driving object activates the common driving mode, controlling the indicator light to emit a third color light and flash a third preset number of times at a fourth preset frequency for before remaining on.

14. A control system for a driving mode, wherein the system comprises:
a generation module, generating a driving control instruction in response to an actions of an operating member;
a control module, being used for controlling a driving object to execute or exit a target driving mode on the basis of the driving control instruction, wherein the target driving mode comprising a common driving mode and an intelligent driving mode.

15. A controller, comprising a memory, a processor, and a computer program stored on the memory, wherein the computer program, when executed by the processor, implementing the driving mode control method according to any one of claims 1 to 13.

16. A vehicle, comprising: the control system for a driving mode according to claim 14, or a controller according to claim 15.
